# EUROPEAN PATENT SPECIFICATION

(11) **EP 2 773 647 B1**
(45) Date of publication and mention of the grant of the patent: **28.12.2016**
(21) Application number: 12783808.4
(22) Date of filing: 31.10.2012
(51) Int. Cl.: C07F 7/08

(54) **HYDROPHILIC ORGANOSILANES**
HYDROPHILE ORGANOSILANE
ORGANOSILANES HYDROPHILES

(30) Priority: 04.11.2011 US 201161555526 P; 13.03.2012 US 201261610072 P
(43) Date of publication of application: 10.09.2014
(73) Proprietor: Dow Corning Corporation, Midland, Michigan 48686-0994 (US)
(72) Inventor: FERRITTO, Michael, Salvatore, Midland, MI 48642 (US); LI, Lok, Ming, Eva, Midland, MI 48640 (US); PETROFF, Lenin, James, Bay City, MI 48708 (US); ROIDL, Josef, 55291 Saulheim (DE); SURGENOR, Avril, B-1410 Waterloo (BE)
(74) Representative: Ede, Eric
(86) International application number: PCT/US2012/062646
(87) International publication number: WO 2013/066911

(56) References cited:
- EP-A2- 0 016 907
- DE-A1- 2 426 698
- JP-A- H0 756 127
- US-A1- 2009 035 655
- AKIMOTO T ET AL: "Polymeric percutaneous drug penetration enhancer - Synthesis and enhancing property of PEG/PDMS block copolymer with a cationic end group", JOURNAL OF CONTROLLED RELEASE, ELSEVIER, AMSTERDAM, NL, vol. 49, no. 2-3, 15 December 1997 (1997-12-15), pages 229-241, XP004101949, ISSN: 0168-3659, DOI: 10.1016/S0168-3659(97)00092-8
- BOKSANYI L ET AL: "CHEMICALLY MODIFIED SILICON DIOXIDE SURFACES REACTION OF N-ALKYLDIMETHYLSILANOLS AND N-OXAALKYL-DIMETHYLSILANOLS WITH THE HYDRATED SURFACE OF SILICON-DIOXIDE-THE QUESTION OF THE LIMITED SURFACE CONCENTRATION", ADVANCES IN COLLOID AND INTERFACE SCIENCE, XX, XX, vol. 6, 1 January 1976 (1976-01-01), pages 95-137, XP000600519, DOI: 10.1016/0001-8686(76)85001-4
- SABOURAULT NICOLAS ET AL: "PLATINUM OXIDE (PTO(2)): A POTENT HYDROSILYLATION CATALYST", ORGANIC LETTERS, AMERICAN CHEMICAL SOCIETY, US, vol. 4, no. 13, 27 June 2002 (2002-06-27), pages 2117-2119, XP009077324, ISSN: 1523-7060, DOI: 10.1021/OL025658R
- BOKSANYI ET AL.: "Note on the Preparation of Alkyl- and Oxaalkyl-dimethylsilanols", HELVETICA CHIMICA ACTA, VERLAG HELVETICA CHIMICA ACTA, BASEL, CH, vol. 59, no. 3, 1 January 1976 (1976-01-01), pages 717-727, XP009165548, ISSN: 0018-019X, DOI: 10.1002/HLCA.19760590302

## Description

### CROSS-REFERENCE TO RELATED APPLICATIONS

This application claims the benefit of US Application No. 61/555,526 as filed on 4 November 2011, and US Application No. 61/610,072 as filed on 13 March 2012.

### BACKGROUND ART

AKIMOTO T ET AL: "Polymeric percutaneous drug penetration enhancer - Synthesis and enhancing property of PEG/PDMS block copolymer with a cationic end group", JOURNAL OF CONTROLLED RELEASE, ELSEVIER, AMSTERDAM, NL, vol. 49, no. 2-3, 15 December 1997 (1997-12-15), pages 229-241, XP004101949, ISSN: 0168-3659, DOI: 10.1016/S0168-3659(97)00092-8 describes the use of poly(ethylene glycol)/polydimethylsiloxane (PEG/PDMS) block copolymers containing an ammonium moiety at one chain end with various molecular weights were prepared to develop a silicone-based polymeric transdermal penetration enhancer. As the precursor of the desired block copolymer, 3-chloropropyl-terminated PEG/PDMS block copolymers were prepared via an initiator method, i.e. the anionic ring-opening polymerization of hexamethylcyclotrisiloxane was carried out by initiating with silanolate anion derived from PEG-silanol, α-3-(dimethylhydroxysilyl)propyl-ω-methyl-PEG oligomer. The initiator, PEG-silanol, was obtained from α-allyl-PEG by hydrosilylation with dimethylethoxysilane, followed by hydrolysis of the ethoxysilyl group. The enhancing activity in the drug penetration was evaluated by in vitro experiments. The enhancing activities were influenced by the chain length of PDMS and PEG components. It was also found that the enhancing activity was due to an increase of the partition coefficient of a drug into the *stratum corneum*, from the determination of kinetic parameters in the drug permeation.

BOKSANYI L ET AL: "CHEMICALLY MODIFIED SILICON DIOXIDE SURFACES REACTION OF N-ALKYLDIMETHYLSILANOLS AND N-OXAALKYL-DIMETHYLSILANOLS WITH THE HYDRATED SURFACE OF SILICON-DIOXIDE-THE QUESTION OF THE LIMITED SURFACE CONCENTRATION", ADVANCES IN COLLOID AND INTERFACE SCIENCE, vol. 6, 1 January 1976 (1976-01-01), pages 95-137, XP000600519, DOI: 10.1016/0001-8686(76)85001-4 discusses the proposal of a model for the surface of highly dispersed silicon dioxides (Aerosil, Cabosil). In the first part, the investigation of the uncatalysed reaction of the surface hydroxyls on Cabosil with alkyl and oxa-alkyldimethylsilanols is described. The reaction mechanism is discussed on the basis of kinetic measurements. The reaction attains a limiting surface concentration of 3.1 µmol m⁻² of alkyldimethylsiloxy groups, a value which is independent of the chain length of the non-branched alkyl substituent, as well as of the reaction temperature between 200 and 340°C. By repeating the reaction, the surface concentration can be further increased. However, the limiting value attained after about three repeated treatments at 300°C depends on the chain length of the alkyl substituent, 4.0 µmol m⁻² for trimethylsiloxy groups and 3.5 for the other alkyldimethylsiloxy groups with longer alkyl or oxa-alkyl substituents. The catalysed reaction was investigated to find that the reaction is catalysed by bases, the best catalyst having protons attached to the basic center. By repeating the reaction, a layer could be chemically bonded onto the surface, the density of which is determined only by the size of the substituent. The maximum attainable concentration depends also on the temperature. Such a dense layer could not be prepared with oxa-alkyldimethylsiloxy substituents.

DE2426698 describes a process for preparing silanized substrates The invention relates to a method for silanizing silica-based carrier materials.

SABOURAULT NICOLAS ET AL: "PLATINUM OXIDE (PTO(2)): A POTENT HYDROSILYLATION CATALYST", ORGANIC LETTERS, AMERICAN CHEMICAL SOCIETY, US, vol. 4, no. 13, 27 June 2002 (2002-06-27), pages 2117-2119, XP009077324, ISSN: 1523-7060, DOI: 10.1021/OL025658R discusses the use of platinum oxide as a versatile and powerful hydrosilylation catalyst upon a wide variety of functionalized alkenes and especially aminated alkenes. Moreover, this catalyst provides highly reproducible results and easy removal thereby making platinum oxide a useful tool for hydrosilylation reaction.

BOKSANYI ET AL.: "Note on the Preparation of Alkyl- and Oxaalkyl-dimethylsilanols", HELVETICA CHIMICA ACTA, VERLAG HELVETICA CHIMICA ACTA, BASEL, CH, vol. 59, no. 3, 1 January 1976 (1976-01-01), pages 717-727, XP009165548, ISSN: 0018-019X, DOI: 10.1002/HLCA.19760590302 discusses the preparation of a series of alkyl- and (mono-, di- and poly-) oxaalkyl-dimethylsilanols wherein the stability of such compounds on storage is considerably increased by previous filtration through a silica gel column.

EP 0 016 907 describes preparations for making wool shrink-proof. US 2009/035655 is concerned with a crosslinkable composition for a battery electrolyte. JP H07 56127 describes a surface treating liquid for improving the hydrophilicity of a contact lens surface. In all organosilanes disclosed therein no propoxy unit is found.

### BACKGROUND OF THE INVENTION

There is an on-going need to develop improved composition treatments to render various surfaces more hydrophilic. Many such surfaces are naturally hydrophobic or have limited ability to absorb water or polar liquids or have these liquids wet the surface. These surfaces may include substrates such as fibers, textiles, plastics, glass, or metals. Treating the surface to render them more hydrophilic may improve properties such as moisture pick up, absorbency, surface wetting, breathability and the like. Many of the hydrophilic surface treatments are based on the physical absorption of the treatment molecules with a surface. As such, the treatments are not robust and are easily washed off or removed.

Thus, there is a need to identify materials that can be used to treat various surfaces to render them hydrophilic. Furthermore, there is a need to identify such hydrophilic materials that permanently modify a surface and more permanently bond to the surface.

### BRIEF SUMMARY OF THE INVENTION

The present inventors have discovered certain organosilanes that improve the hydrophilicity of treated surfaces. In particular, the present disclosure relates to compositions comprising an organosilane having the formula;

(R¹)₍₃₋ₙ₎(R²O)ₙSiR³O(CH₂CH₂O)ₐ(C₃H₆O)_{b} R⁴

where
- n: is 1 or 2,
- a ≥ 1, b: may vary from 1 to 30, with the proviso a≥b,
- R¹: is a hydrocarbon group containing 1 to 12 carbon atoms,
- R²: is hydrogen or an alkyl group containing 1 to 6 carbon atoms,
- R³: is a divalent hydrocarbon group containing 2 to 12 carbon atoms,
- R⁴: is hydrogen, R¹, or an acetyl group.

The present organosilanes, or compositions containing reaction products derived from the present organosilanes, are particularly useful to treat various surfaces to render them more hydrophilic. In particular, the present organosilanes and related compositions are useful to treat textiles, fibers, or hard surfaces to improve the hydrophilicity of the surface. The treated surface may have improved absorbency, moisture pick up, or surface wettability properties. Furthermore, subsequent surface treatments with the present compositions are more permanent than many treatments.

### BRIEF DESCRIPTION OF THE DRAWINGS

None

### DETAILED DESCRIPTION OF THE INVENTION

The present disclosure relates to compositions comprising an organosilane, or reaction products therefrom, having the formula;

(R¹)₍₃₋ₙ₎(R²O)ₙSiR³O(CH₂CH₂O)ₐ (C₃H₆O)_{b}R⁴

where
the subscript "n" is 1 or 2, alternatively n is 2,
the subscript "a" is equal to or greater than 1,
the subscript "b" varies from 1 to 30,
with the proviso that a ≥ b,
- R¹: is a hydrocarbon group containing 1 to 12 carbon atoms, alternatively R¹ is an alkyl group or a phenyl group, alternatively R¹ is methyl,
- R²: is hydrogen or an alkyl group containing 1 to 6 carbon atoms, alternatively R² is methyl or ethyl, alternatively R² is ethyl,
- R³: is a divalent hydrocarbon group containing 2 to 12 carbon atoms, alternatively R³ contains 2 to 6 carbon atoms, alternatively R³ is propylene, or isobutylene, alternatively R³ is -CH₂CH₂C(CH₃)₂- alternatively R³ is propylene,
- R⁴: is hydrogen, R¹, or an acetyl group, alternatively R⁴ is methyl.

The present organosilanes contain a polyoxyalkylene moiety which is predominately a polyoxyethylene chain as designated by (CH₂CH₂O)ₐ in the above formula. The polyoxyalkylene group comprises predominately oxyethylene units (C₂H₄O), and 1 to 30 oxypropylene units (C₃H₆O), but may also contain oxybutylene units (C₄H₈O), or mixtures thereof. When the polyoxyalkylene group comprises a mixture of (C₂H₄O), (C₃H₆O), and/or (C₄H₈O) units, the oxyalkylene groups are typically randomized with the group but can also be blocked. Typically, the polyoxyalkylene group comprises a majority of polyoxyethylene units, as defined on a molar basis and indicated in the above formula by the "a" subscript. The subscript "a" is equal to or greater than 1,
alternatively a may vary from 4 to 30,
   alternatively a may vary from 4 to 20,
      alternatively a may vary from 4 to 10,
         alternatively a may vary from 5 to 8,
            alternatively a is 7.

The subscript "b" varies from 1 to 30,
alternatively b may vary from 1 to 20,
   alternatively b may vary from 10 to 20,
      alternatively b may vary from 15 to 20,
with the proviso that a ≥ b.

In one embodiment, the organosilane has the following average formula; (CH₃)(CH₃O)₂Si CH₂CH₂C(CH₃)₂ O(CH₂CH₂O)₁₈(C₃H₆O)₁₈H.

The present organosilanes may be prepared by any method known in the art for preparing organosilanes, or alternatively the organosilanes may be prepared by the process as discussed below.

The organosilane may be prepared by a process comprising reacting:
a) an organosilane of the formula

   (R¹)₍₃₋ₙ₎(R²O)ₙSiH,

   where
   R¹ is a hydrocarbon group containing 1 to 12 carbon atoms,
   R² is hydrogen or an alkyl group containing 1 to 6 carbon atoms,
   the subscript n is 1 or 2, alternatively n is 2,
b) a polyoxyalkylene of the formula R⁵O(CH₂CH₂O)ₐ (C₃H₆O)_{b}R⁴ where
   the subscript "a" is equal to or greater than 1,
   the subscript "b" varies from 1 to 30, with the proviso that a ≥ b,
   R⁴ is hydrogen, R¹, or an acetyl group,
      R⁵ is an unsaturated aliphatic hydrocarbon group
   containing 2 to 12 carbon atoms, and
c) a hydrosilylation catalyst.

Component a) is an organosilane of the formula (R¹)₍₃₋ₙ₎(R²O)ₙSiH. Alternately, it is possible for two or more H groups to be present on the Si atom, in which case R¹ would be zero. In cases such as this, two polyether groups would subsequently be grafted onto the Si atom. Representative examples of organosilanes suitable as component a) in the present process include;

(CH₃)(CH₃CH₂O)₂SiH,

(CH₃)(CH₃O)₂SiH,

(CH₃CH₂)(CH₃CH₂O)₂SiH,

(CH₃CH₂)(CH₃O)₂SiH

(CH₃)(HC(CH₃)₂O)₂SiH

(CH₃CH₂O)₂SiH₂

The polyoxyalkylene useful as component b) can be any polyoxyalkylene that is terminated at one molecular chain end with an unsaturated aliphatic hydrocarbon group containing 2 to 12 carbon atoms. The polyoxyalkylene may result from the polymerization of ethylene oxide, propylene oxide, butylene oxide, 1,2-epoxyhexane, 1, 2-epoxyoctance, cyclic epoxides such as cyclohexene oxide or exo-2,3-epoxynorborane. The polyoxyalkylene group comprises predominately oxyethylene units (C₂H₄O), but may also contain minor amounts of oxypropylene units (C₃H₆O), oxybutylene units (C₄H₈O), or mixtures thereof. Typically, the polyoxyalkylene group comprises a majority of oxyethylene units, as defined on a molar basis and indicated in the above formula by the "a" subscript. When present, the oxypropylene units are indicated in the above formula by the "b" susbscript. The unsaturated aliphatic hydrocarbon group can be an alkenyl or alkynyl group. Representative, non- limiting examples of the alkenyl groups are shown by the following structures; H₂C=CH-, H₂C=CHCH₂-, H₂C=CHC(CH₃)₂ - H₂C=C(CH₃)CH₂-, H₂C=CHCH₂CH₂-, H₂C=CHCH₂CH₂CH₂-, and H₂C=CHCH₂CH₂CH₂CH₂-. Representative, non- limiting examples of alkynyl groups are shown by the following structures; HC=C-, HC≡CCH₂-, HC≡CCH(CH₃)-, HC≡CC(CH₃)₂- , and HC≡CC(CH₃)₂CH₂-.

In one embodiment, R⁵ in the polyoxyalkylene of the formula is H₂C=CHCH₂-, or H₂C=CHC(CH₃)₂-. The H₂C=CHC(CH₃)₂- group is a preferred embodiment for preparing the present organosilanes having a greater purity since this hydrocarbon group is not susceptible to rearrangements during the hydrosilylation reaction.

Polyoxyalkylenes having an unsaturated aliphatic hydrocarbon group at one molecular terminal are known in the art, and many are commercially available. Representative, non-limiting examples of polyoxyalkylenes having an unsaturated aliphatic hydrocarbyl at one molecular terminal include;

H₂C=CHCH₂O[C₂H₄O]ₐH

H₂C=CHCH₂O[C₂H₄O]ₐ[C₃H₆O]_{b}H

H₂C=CHCH₂O[C₂H₄O]ₐCH₃

H₂C=CHC(CH₃)₂O[C₂H₄O]ₐCH₃

H₂C=CHC(CH₃)₂O[C₂H₄O]ₐ[C₃H₆O]_{b}H

H₂C=CHCH₂O[C₂H₄O]ₐC(O)CH₃

H₂C=C(CH₃)CH₂O[C₂H₄O]ₐH

HC=CCH₂O[C₂H₄O]ₐH

HC≡CC(CH₃)₂O[C₂H₄O]ₐH

where a and b are as defined above.

Polyoxyalkylenes having an unsaturated aliphatic hydrocarbon group at one molecular terminal are commercially available from numerous suppliers including; NOF (Nippon Oil and Fat, Tokyo, Japan), Clariant Corp. (Switzerland), and Dow Chemical Corp. (Midland, MI). Commercial examples of these materials include Uniox MUS-4 from NOF, Polyglykol AM 450 from Clariant, and SF 400 and SF 443 from Dow Chemical Corp.

The amounts of components a) and b) used in the hydrosilylation reaction may vary. The molar ratio of the SiH units of component a) to the aliphatic unsaturated groups of component b) may range from 10/1 to 1/10, alternatively from 5/1 to 1/5, or alternatively from 1/1 to 1/2. Typically, the amounts of components a) and b) are selected to provide molar excess of the unsaturated groups of component b) to the SiH groups in component a).

Component c) is a hydrosilylation catalyst. The hydrosilylation catalyst may be any suitable Group VIII metal based catalyst selected from a platinum, rhodium, iridium, palladium or ruthenium. Group VIII group metal containing catalysts useful to catalyze curing of the present compositions can be any of those known to catalyze reactions of silicon bonded hydrogen atoms with silicon bonded unsaturated hydrocarbon groups. The preferred Group VIII metal for use as a catalyst to effect cure of the present compositions by hydrosilylation is a platinum based catalyst. Some preferred platinum based hydrosilylation catalysts for curing the present composition are platinum metal, platinum compounds and platinum complexes.

Suitable platinum catalysts are described in US 2,823,218 (commonly referred to as "Speier's catalyst) and U.S. Patent No. 3,923,705. The platinum catalyst may be "Karstedt's catalyst", which is described in Karstedt's U.S. Patent Nos. 3,715,334 and 3,814,730. Karstedt's catalyst is a platinum divinyl tetramethyl disiloxane complex typically containing about one-weight percent of platinum in a solvent such as toluene. Alternatively the platinum catalyst may be a reaction product of chloroplatinic acid and an organosilicon compound containing terminal aliphatic unsaturation, as described in U.S. Patent No. 3,419,593. Alternatively, the hydrosilylation catalyst is a neutralized complex of platinum chloride and divinyl tetramethyl disiloxane, as described in US 5,175,325.

Further suitable hydrosilylation catalysts are described in, for example,
U.S. Patents 3,159,601; 3,220,972; 3,296,291; 3,516,946; 3,989,668; 4,784,879; 5,036,117; and 5,175,325 and EP 0 347 895 B1.

The hydrosilylation catalyst may be added in an amount equivalent to as little as 0.001 part by weight of elemental platinum group metal, per one million parts (ppm) of the total reaction composition. Typically, the concentration of the hydrosilylation catalyst in the reaction composition is that capable of providing the equivalent of at least 1 part per million of elemental platinum group metal. A catalyst concentration providing the equivalent of 1 to 500, alternatively 50 to 500, alternatively 50 to 200 parts per million of elemental platinum group metal may be used.

The reaction effected in the present process is a hydrosilylation reaction, wherein the SiH units of component a) react with the unsaturated aliphatic hydrocarbon group of component b) form an Si-C bond. The reaction may be conducted under those conditions known in the art for effecting hydrosilylations reactions.

The hydrosilylation reaction can be conducted neat or in the presence of a solvent. The solvent can be an alcohol such as methanol, ethanol, isopropanol, butanol, or n-propanol, a ketone such as acetone, methylethyl ketone, or methyl isobutyl ketone; an aromatic hydrocarbon such as benzene, toluene, or xylene; an aliphatic hydrocarbon such as heptane, hexane, or octane; a glycol ether such as propylene glycol methyl ether, dipropylene glycol methyl ether, propylene glycol n-butyl ether, propylene glycol n-propyl ether, or ethylene glycol n-butyl ether, a halogenated hydrocarbon such as dichloromethane, 1,1,1-trichloroethane or methylene chloride, chloroform, dimethyl sulfoxide, dimethyl formamide, acetonitrile, tetrahydrofuran, white spirits, mineral spirits, or naphtha.

The amount of solvent can be up to 70 weight percent, but is typically from 20 to 50 weight percent, said weight percent being based on the total weight of components in the hydrosilylation reaction. The solvent used during the hydrosilylation reaction can be subsequently removed from the resulting organosilane by various known methods.

Additional components can be added to the hydrosilylation reaction which are known to enhance such reactions. These components include salts such as sodium acetate which have a buffering effect in combination with platinum catalysts.

The present disclosure also relates to the organosilane compositions produced by the aforementioned process.

The present organosilanes contain at least one alkoxy group, as represented by (R²O) in the formula above. As such, the present organosilanes will hydrolyze in aqueous medium, and may further condense to form oligomeric or higher molecular weight polymeric siloxanes. Thus, the present disclosure relates to the reaction products resulting from the hydrolysis and/or condensation of the aforementioned organosilanes. The present organosilanes, or subsequently produced oligomeric or polymeric siloxanes derived from the organosilanes, may react with hydroxyl functional compounds or surfaces. Since the present organosilanes contain a polyalkylene oxide chain that is predominately ethylene oxide, the present organosilanes may be considered as "hydrophilic". Thus, the present organosilanes may be used to treat various surfaces to impart greater "hydrophilicity" to the surface. Furthermore, the reactivity of the silane moiety may allow the present compositions to bond to various surfaces to provide a longer lasting, more durable hydrophilic treatment.

When used to treat various surfaces, the organosilane may be applied neat, as an aqueous solution, as a solution in an organic solvent, or as a component in a multicomponent formulation. When applied as a solution, additional components such as acids or bases to buffer the pH may be added to the solution which are known to enhance the hydrolysis and condensation of alkoxysilanes.

The present organosilanes, or reaction products derived therefrom, may be used to improve the hydrophilicity of various surfaces. The treatments may be longer lasting or more durable than conventional treatments. Surfaces suitable for treatment include various hard surfaces such as glass, metals, plastics, minerals, and woods. The surfaces further include fibers, fabrics or textile surfaces. Fibers or textiles that can be treated with the treatment composition include natural fibers such as cotton, silk, linen, and wool; regenerated fibers such as rayon and acetate; synthetic fibers such as polyesters, polyamides, polyacrylonitriles, polyethylenes, and polypropylenes; combinations, and blends thereof. The form of the fibers can include threads, filaments, tows, yarns, woven fabrics, knitted materials, non-woven materials, paper, carpet, and leather. In a further embodiment, the fiber is a cellulosic fiber such as cotton.

The fiber treatment composition comprising the present organosilanes, oligomeric or polymers derived therefrom, can be applied to the fiber and/or textile during making the fibers or textiles, or later via a post application process. After application, carriers (if any) can be removed from the treatment composition for example by drying the composition at ambient or elevated temperature. The amount of treatment composition applied to the fibers and textiles is typically sufficient to provide 0.1 to 15 weight percent of the composition on the fibers and textiles, based on their dry weight, preferably in an amount of 0.2 to 5 weight percent based on the dry weight of the fiber or textile.

### EXAMPLES

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention. All percentages are in wt. %. All measurements were conducted at 23ºC unless indicated otherwise.

### Example 1

### Preparation of Poly (EO) Methyl 3-(Methyldiethoxysilyl) Propyl Ether

PG SF-Allyl EO7-Me (463.73 g; UNIOX MUS-4 from NOF Corporation) and sodium acetate (0.05 g; from Fisher Biotech) were loaded in a 2 L 3-necked round-bottomed flask (RBF) fitted with a crescent-shaped paddle stirring rod, a Claisen adaptor itself fitted with a water cooled condenser and a 250 mL additional funnel loaded with methyldiethoxylsilane (136.52 g; from Gelest, Inc), and a thermometer adaptor itself fitted with a thermal couple, all under nitrogen purge. The reaction mixture was heated to 60 ºC when 20 wt.% or 28 g of methyldiethoxylsilane was fed in the RBF immediately followed by the addition of 1% Dow Corning^{®} 2-0707 INT catalyst in IPA (∼400 µL or 6 ppm). The exotherm observed instantaneously was 18 ºC. The remaining methyldiethoxylsilane in the additional funnel was being dispensed into the RBF at ∼1.21 g/min rate while temperature was set at 80 ºC and being maintained below 85 ºC throughout the addition. The second charge of 1% Dow Corning^{®} 2-0707 INT catalyst in IPA (∼500 µL or 7 ppm) was done after the first hour of silane addition and ∼5 ºC exotherm was seen. When all methyldiethoxylsilane was in the RBF, the temperature was set at 85 ºC set point and the third addition of 1% Dow Corning^{®} 2-0707 INT catalyst in IPA (∼500 µL or 7 ppm) was added while no exotherm was observed. The product mixture was then allowed to reflux for another hour for hydrosilylation completion. Once the reaction was determined to be done, residual SiH was measured by IR which was 34 ppm at peak 2150 cm⁻¹. On the following day, the Claisen adapter was replaced by a water cooled condenser fitted with a 250 mL round-bottomed flask. The set-up was connected to vacuum for stripping. The product mixture was stripped for 1 h under 10-40 mmHg vacuum pressure at 90 ºC. The final residual SiH content measured by IR was 4 ppm at 2150 cm⁻¹. The final finished product was pressure-filtered on 20 µm sized filter paper to remove sodium acetate.

### Example 2

### Preparation of Poly (EO) Methyl 3-(Methyldimethoxysilyl) Propyl Ether

PG SF-Allyl EO7-Me (489.378 g; UNIOX MUS-4 from NOF Corporation) and sodium acetate (0.1 g; from Fisher Biotech) were loaded in a 2 L 3-necked round-bottomed flask (RBF) fitted with a crescent-shaped paddle stirring rod, a Claisen adaptor itself fitted with a water cooled condenser and a 250 mL additional funnel loaded with Dow Corning^{®} Z-6701 Silane (110.622 g), and a thermometer adaptor itself fitted with a thermal couple, all under nitrogen purge. The reaction mixture was heated to 45 ºC when 10 wt.% or 11 g of Z-6701 silane was fed in the RBF immediately followed by the addition of 1% Dow Corning^{®} 2-0707 INT catalyst in IPA (∼400 µL or 6 ppm). The exotherm observed instantaneously was 2-3 ºC. The remaining Z-6701 in the additional funnel was being dispensed into the RBF at ∼1.67 g/min rate while temperature set at 53 ºC plus 2 ºC exotherm was maintained throughout the addition. When all Z-6701 was in the RBF, the temperature of mixture dropped back to the 53 ºC set point and hence, there was a second addition of 1% Dow Corning^{®} 2-0707 INT catalyst in IPA (∼500 µL or 7 ppm). The mixture was then held for another 2h to allow reaction gone for completion in which the third addition of 1% Dow Corning^{®} 2-0707 INT catalyst in IPA (∼500 µL or 7 ppm) were made after the first hour of reflux. A constant 2 ºC exotherm was observed after each time the catalyst was added and had lasted for 1 h except for the last addition which lasted only 30 minutes. Once the reaction was determined to be done, residual SiH was measured by IR which was 35 ppm at peak 2150 cm⁻¹. On the following day, the Claisen adapter was replaced by a water cooled condenser fitted with a 250 mL round-bottomed flask. The set-up was connected to vacuum for stripping. The product mixture was stripped for 1 h under 10-20 mmHg vacuum pressure at 60 ºC. The final residual SiH content measured by IR was 4 ppm at 2150 cm⁻¹. The final finished product was pressure-filtered on 20 µm sized filter paper to remove sodium acetate.

### Example 3

### Preparation of Poly (EO) Hydroxyl 3-(Methyldiethoxysilyl) Propyl Ether

PG SF-Allyl EO7-OH (191.85 g; from Dow Chemical Company) and sodium acetate (0.05 g; from Fisher Biotech) were loaded in a 500 mL 3-necked round-bottomed flask (RBF) fitted with a crescent-shaped paddle stirring rod, a Claisen adaptor itself fitted with a water cooled condenser and a 250 mL additional funnel loaded with methyldiethoxylsilane (58.67 g from Gelest, Inc), and a thermometer adaptor itself fitted with a thermal couple, all under nitrogen purge. The reaction mixture was heated to 60 ºC when 10 wt.% or 6 g of methyldiethoxylsilane was dispensed in the RBF immediately followed by the addition of 1% Dow Corning^{®} 2-0707 INT catalyst in IPA (∼230 µL or 8 ppm). The exotherm observed instantaneously was 7 ºC. The remaining methyldiethoxylsilane in the additional funnel was being dispensed into the RBF at ∼0.88g/min rate while temperature was set at 67 ºC and being maintained at ∼75 ºC throughout the addition. When all methyldiethoxylsilane was added to the RBF, the temperature was set at 75ºC to reflux for an hour to allow the reaction to go to completion. The reaction mixture was cooled down to 60 ºC and 159 ppm of residual SiH was obtained by IR at peak 2150 cm⁻¹. A second addition of 1% Dow Corning^{®} 2-0707 INT catalyst in IPA (∼50 µL or ∼ 1.7 ppm) was charged to the reaction mixture, however, no exotherm was detected. The reaction temperature was increased to 80 ºC and refluxed for an hour. The residual SiH was measured 126 ppm. On the following day, the product mixture was transferred to a 1 L round-bottomed flask for rotary evaporation. Some material was stripped out while the vacuum pressure was at ~3-4 mmHg and the water bath was at 80 ºC. This process lasted for two hour and the final product has 13 ppm of SiH left. The final product was pressure-filtered on 20 µm filter paper to remove sodium acetate.

### Example 4

### Preparation of Poly (EO) Hydroxyl 3-(Methyldimethoxysilyl) Propyl Ether

PG SF-Allyl EO7-OH (80.58 g; from Dow Chemical Company) and sodium acetate (0.03 g; from Fisher Biotech) were loaded in a 250 mL 3-necked round-bottomed flask (RBF) fitted with a crescent-shaped paddle stirring rod, a Claisen adaptor itself fitted with a water cooled condenser and a 250 mL additional funnel loaded with Dow Corning^{®} Z-6701 Silane (20.06 g), and a thermometer adaptor itself fitted with a thermal couple, all under nitrogen purge. The reaction mixture was heated to 45.6 ºC when 10 wt.% or 2 g of Dow Corning^{®} Z-6701 Silane was dispensed in the RBF immediately followed by the addition of 1% Dow Corning^{®} 2-0707 INT catalyst in IPA (∼60 µL or 5 ppm). The exotherm observed instantaneously was 0.9 ºC. The remaining Dow Corning^{®} Z-6701 Silane in the additional funnel was being dispensed into the RBF at ~0.21g/min rate while temperature was set at 50 ºC and being maintained at ∼49-51 ºC throughout the addition. When all methyldiethoxylsilane was added to the RBF, the temperature was set at 57 ºC to reflux for 2.5 hours to allow reaction gone for completion. The reaction mixture was cooled down to room temperature and 121 ppm of residual SiH was obtained by IR at peak 2150 cm⁻¹. On the following day, extra PG SF-Allyl EO7-OH (5.48 g from Dow Chemical Company) was added to the reaction mixture while holding the reaction at 57±1 ºC for 4.5 h, resulting in 20 ppm residual SiH. The Claisen adapter was replaced by a water cooled condenser fitted with a 250 mL round-bottomed flask the day after. The set-up was connected to vacuum for stripping. The product mixture was stripped for 3 h under 10-50 mmHg vacuum pressure at 80 ºC. The final residual SiH content measured by IR was still 20 ppm at 2150 cm⁻¹. The final finished product was pressure-filtered on 20 µm sized filter paper to remove sodium acetate.

### Example 5

### Preparation of Poly (EO) Acetate 3-(Methyldimethoxysilyl) Propyl Ether

PG SF-Allyl EO7-Ac (247.77g) and sodium acetate (0.05 g from Fisher Biotech) were loaded in a 500 mL 3-necked round-bottomed flask (RBF) fitted with a crescent-shaped paddle stirring rod, a Claisen adaptor itself fitted with a water cooled condenser and a 250 mL additional funnel loaded with Dow Corning^{®} Z-6701 Silane (52.98 g), and a thermometer adaptor itself fitted with a thermal couple, all under nitrogen purge. The reaction mixture was heated to 47 ºC when 10 wt.% or 5 g of Dow Corning^{®} Z-6701 Silane was dispensed in the RBF immediately followed by the addition of 1% Dow Corning^{®} 2-0707 INT catalyst in IPA (∼270 µL or 8 ppm). The exotherm observed instantaneously was 1-2 ºC. The remaining Dow Corning^{®} Z-6701 Silane in the additional funnel was being dispensed into the RBF at ∼0.79 g/min rate while temperature was set at 54 ºC and being maintained below 58 ºC throughout the addition. When all Dow Corning^{®} Z-6701 Silane was added to the RBF, the temperature was set at 54 ºC to reflux for an hour to allow reaction gone for completion. 540 ppm of residual SiH was obtained by IR at peak 2150 cm⁻¹. Another hour of reflux was proceeded and the residual SiH was measured 300 ppm. On the following day, the Claisen adapter was replaced by a water cooled condenser fitted with a 250 mL round-bottomed flask. The set-up was connected to vacuum for stripping. The product mixture was stripped for a total of 3 h under 20-80 mmHg vacuum pressure at 62 ºC. The final residual SiH content measured by IR was 28 ppm at 2150 cm⁻¹. The final finished product was pressure-filtered on 20 µm sized filter paper to remove sodium acetate.

### Example 6

To a three neck round bottom flask was added 0.20g (2.4mmoles) of sodium acetate and 171.8g (0.29moles) of a polyether containing an allyl end, approximately 12 ethylene oxide units and capped with acetate. Next, 28.2g (0.21moles) of methyl diethoxy silane (MDES) was added to the flask. With stirring under N₂, the mixture was heated to 75°±5°C and then 3ppm of Pt catalyst was added. After a small exotherm (<10°±1 °C) the mixture was maintained at 85°±5°C for 6 hours. At this point the reaction was 98.9% complete as measured by SiH consumption via FTIR. The mixture was stripped of volatiles by heating to 120°±5°C/5-10mmHg for 4 hours. Finally, the mixture was cooled to room temperature and filtered through Celite that was supported on a Nylon filter to yield 167g (83% yield) of a light yellow oil. Characterization of this material indicated that the desired product had been obtained as evidenced by the single peak in the ²⁹Si NMR at approximately -5.6ppm.

### Example 7

To a three neck round bottom flask was added 0.25g (3.0mmoles) of sodium acetate and 189.3g (97mmoles) of a polyether containing an allyl end, approximately 18 ethylene oxide units and 18 propylene oxide units and capped with acetate. Next, 10.9g (81 moles) of methyl diethoxy silane (MDES) was added to the flask. With stirring under N₂, the mixture was heated to 75°±5°C and then 4ppm of Pt catalyst was added. After a small exotherm (<10°±1 °C) the mixture was maintained at 85°±5°C for 3 hours. At this point the reaction was 99.6% complete as measured by SiH consumption via FTIR. The mixture was stripped of volatiles by heating to 120°±5°C/5-10mmHg for 5 hours. Finally, the mixture was cooled to room temperature and filtered through Celite that was supported on a Nylon filter to yield 153g (76% yield) of a light yellow oil. Characterization of this material indicated that the desired product had been obtained as evidenced by the single peak in the ²⁹Si NMR at approximately -5.6ppm.

### Example 8

To a three neck round bottom flask was added 0.25g (3.0mmoles) of sodium acetate and 168.7g (0.31 moles) of a polyether containing an allyl end, approximately 12 ethylene oxide units and was not capped. Next, 31.4g (0.24moles) of methyl diethoxy silane (MDES) was added to the flask. With stirring under N₂, the mixture was heated to 75°±5°C and then 3ppm of Pt catalyst was added. After a small exotherm (<10°±1 °C) the mixture was maintained at 85°±5°C for 3 hours. At this point the reaction was 99.5% complete as measured by SiH consumption via FTIR. The mixture was stripped of volatiles by heating to 120°±5°C/5-10mmHg for 4 hours. Finally, the mixture was cooled to room temperature and filtered through Celite that was supported on a Nylon filter to yield 149g (74% yield) of a light yellow oil. Characterization of this material indicated that the desired product had been obtained as evidenced by the single peak in the ²⁹Si NMR at approximately -5.6ppm.

### Example 9

The following tests were conducted to evaluate the performance of the present organosilanes for their ability to improve the water absorption of cellulosic fibers.
**Fiber Treatment Test:** 6 of the 10 cm x 10 cm non-woven 100% cotton fiber weighted 120 gram per square meter (gsm) manufactured by PurCotton™ were used in testing the organosilane of Example 2 (poly (EO) Methyl 3-(Methyldimethoxysilyl) Propyl Ether. A circle with area ∼13 cm² was drawn on each fiber sheet, 2 of which were applied the **Example 2** organosilane neat in that whole circle area, 2 other sheets were applied with ~ 29.7% the organosilane of **Example 2** in DI water while the last 2 sheets served as control experiment and were untreated. The coated area was then dried at room temperature by blowing air to it for 5 min each. A syringe pump (Model: Cole Parmer 74900 series) was utilized since it could be programmed to dispense liquid at a constant rate and the syringe was filled with DI water. The time for the circle area to fill with liquid by spreading was recorded. It should be recognized that some of the add-on weight to the cloth could include silane + residual moisture that was not removed during the drying process. The results from these tests are summarized below in Table 1.

### Example 10

To a 500ml three neck round bottom flask was added 188.9g (98.2mmoles) of a polyether that contains 18 ethylene oxide units, 18 propylene oxide units and is capped with a 3,3-dimethyl-1-propenyl group on one end. The polyether is heated to 40°±3°C and approximately 5% of total volume of methyldimethoxysilane is added (total volume is 15.7g, 148mmoles) to the reaction vessel via an addition funnel. Next, platinum catalyst is added so that the final concentration is 5ppm in the final mixture, and an exotherm is observed. After the exotherm is complete the remaining methyldimethoxysilane is added from the addition funnel at a rate so that the temperature of the mixture remains below 50°C. Upon the addition of all the methyldimethoxysilane, the reaction vessel is maintained at 50°±3°C for 3 hours. Next, the volatiles are removed from the product by increasing the flow of N₂ through the reaction vessel. A low viscosity liquid is obtained.
Analysis by ¹H, ¹³C, ²⁹Si NMR and FTIR confirms that the desired material has prepared and the level of unreacted polyether is less than 1% on a molar basis and no residual SiH is present.

**Table 1**

| **Cloth No.** | **Cloth Weight (g)** | **Cloth weight total after treatment and dried (g)** | **Material Applied on Cloth (g)** | **Time of wetting-absorption (min'sec")** | **Remark** |
|---|---|---|---|---|---|
| 1 | 1.16 | 1.55 | 0.39 | 46"45 | Example 2 applied neat |
| 2 | 1.2 | 1.55 | 0.35 | 45"73 | Example 2 applied neat |
| 3 | 1.15 | 1.61 | 0.46 | 57"96 | Example 2 applied as a 29.7wt % aqueous solution |
| 4 | 1.21 | 1.61 | 0.40 | 59"52 | Example 2 applied as a 29.7wt % aqueous solution |
| 5 | 1.16 | n/a | 0.00 | 1'16"64 | No treatment |
| 6 | 1.21 | n/a | 0.00 | 1'11 "66 | No treatment |

Similar tests were performed using the organosilane from Example 1 with the same procedure. There were a total of two experiments done for each batch of material in order to ensure the results given were robust. The summary of the entire application screening test is shown in Table 2 below.

**Table 2**

| **Batch Number** | **Test 1 (sec)** | | **Test 2 (sec)** | | **Average Time (sec)** | **% Average Time Difference** |
|---|---|---|---|---|---|---|
| Example 1 applied neat | 46.45 | 45.73 | 41.81 | 42.50 | 44.12 | 41 |
| Example 1 applied neat | 40.26 | 40.80 | 44.83 | 46.57 | 43.12 | 42 |
| Example 1 applied as a 29.7wt % aqueous solution | 57.96 | 59.52 | 47.60 | 46.40 | 52.87 | 29 |
| Example 1 applied as a 29.7wt % aqueous solution | 47.81 | 46.57 | 49.52 | 50.48 | 48.60 | 35 |
| Untreated fiber | 76.46 | 71.66 | 75.42 | 74.23 | 74.44 | 0 |

## Claims

1. A composition comprising an organosilane having the formula;
(R¹)₍₃₋ₙ₎(R²O)ₙSiR₃O(CH₂CH₂O)ₐ(C₃H₆O)_{b} R⁴
where
n is 1 or 2,
a ≥ 1, b may vary from 1 to 30, with the proviso a≥b,
R¹ is a hydrocarbon group containing 1 to 12 carbon atoms,
R² is hydrogen or an alkyl group containing 1 to 6 carbon atoms,
R³ is a divalent hydrocarbon group containing 2 to 12 carbon atoms,
R⁴ is hydrogen, R¹, or an acetyl group.

2. The composition of claim 1 where n is 2.

3. The composition of any of the above claims where a ranges from 4 to 30.

4. The composition of any of the above claims where R¹ is methyl and R² is methyl or ethyl.

5. The composition of any of the above claims where R³ is propylene or -CH₂CH₂C(CH₃)₂-.

6. The composition of claim 1 where the organosilane has the average formula (CH₃)(CH₃O)₂Si CH₂CH₂C(CH₃)₂ O(C₂H₄O)₁₈(C₃H₆O)₁₈H.

7. A process for preparing an organosilane composition comprising reacting:
a) an organosilane of the formula (R¹)₍₃₋ₙ₎(R²O)ₙSiH, where
R¹ is an alkyl group containing 1 to 12 carbon atoms,
R² is hydrogen or an alkyl group containing 1 to 6 carbon atoms, the subscript n is 1 or 2,
b) a polyoxyalkylene of the formula R⁵O(CH₂CH₂O)ₐ(C₃H₆O)_{b} R⁴ wherein
a ≥ 1, b may vary from 1 to 30, with the proviso a≥b,
R⁴ is hydrogen, R¹, or an acetyl group,
R⁵ is an unsaturated aliphatic hydrocarbon group containing 2 to 12 carbon atoms, and
c) a hydrosilylation catalyst.

8. The process of claim 7 where R⁵ is
H₂C=CHC(CH₃)₂-.

9. The process of claim 7 or 8 where the organosilane has the formula
(CH₃)(CH₃CH₂O)₂SiH.

10. The process of claim 7 or 9 where the polyoxyalkylene has the formula H₂C=CHCH₂O[C₂H₄O]ₐCH₃, where a varies from 4 to 30.

11. The composition prepared by the process of any one of claims 7-10.

12. A treatment composition comprising reaction products from the hydrolysis and/or condensation of the organosilane according to any of claims 1 - 6 or 11.

13. A method of treating a surface comprising applying the composition according to any of claims 1- 6, 11 or 12 to a surface.

14. The method of claim 13 where the surface is a cellulosic fiber.

15. An article of manufacture comprising the treated fiber of claim 14.

## Patentansprüche

1. Eine Zusammensetzung umfassend ein Organosiloxan mit der Formel:
(R¹)₍₃₋ₙ)(R²O)ₙSiR³O(CH₂CH₂O)ₐ(C₃H₆O)_{b} R⁴
wobei
n 1 oder 2 ist,
a ≥ 1, b zwischen 1 und 30 variieren kann, unter der Bedingung, dass a≥b gilt,
R¹ eine Kohlenwasserstoffgruppe ist, die 1 bis 12 Kohlenstoffatome enthält,
R² Wasserstoff oder eine Alkylgruppe ist, die 1 bis 6 Kohlenstoffatome enthält,
R³ eine zweiwertige Kohlenwasserstoffgruppe ist, die 2 bis 12 Kohlenstoffatome enthält,
R⁴ Wasserstoff ist, R¹, oder eine Acetylgruppe.

2. Zusammensetzung nach Anspruch 1, wobei n 2 ist.

3. Zusammensetzung nach einem der vorstehenden Ansprüche, wobei a zwischen 4 und 30 liegt.

4. Zusammensetzung nach einem der vorstehenden Ansprüche, wobei R¹ Methyl ist und R² Methyl oder Ethyl ist.

5. Zusammensetzung nach einem der vorstehenden Ansprüche, wobei R³ Propylen ist oder -CH₂CH₂C(CH₃)₂-.

6. Zusammensetzung nach Anspruch 1, wobei das Organosiloxan der allgemeinen Formel
(CH₃)(CH₃O)₂SiCH₂CH₂C(CH₃)₂ O(C₂H₄O)₁₈(C₃H₆O)₁₈H entspricht.

7. Verfahren zur Herstellung einer Organosiloxanzusammensetzung, umfassend die Reaktion zwischen:
a) einem Organosiloxan gemäß der Formel (R¹)₍₃₋ₙ₎(R²O)ₙSiH,
wobei R¹ eine Alkylgruppe mit 1 bis 12 Kohlenstoffatomen ist,
R² Wasserstoff oder eine Alkylgruppe ist, die 1 bis 6 Kohlenstoffatome enthält,
der Index n 1 oder 2 ist,
b) einem Polyoxyalkylen gemäß der Formel R⁵O(CH₂CH₂O)ₐ(C₃H₆O)_{b} R⁴ wobei
a ≥ 1, b zwischen 1 und 30 variieren kann, unter der Bedingung, dass a≥b gilt,
R⁴ Wasserstoff ist, R¹, oder eine Acetylgruppe,
R⁵ eine ungesättigte aliphatische Kohlenwasserstoffgruppe ist, die 2 bis 12 Kohlenstoffatome enthält, und
c) ein Hydrosilylierungskatalysator ist.

8. Verfahren nach Anspruch 7, wobei R⁵
H₂C=CHC(CH₃)₂
- ist.

9. Zusammensetzung nach Anspruch 7 oder 8, wobei das Organosiloxan der allgemeinen Formel
(CH₃)(CH₃CH₂O)₂SiH
entspricht.

10. Zusammensetzung nach Anspruch 7 oder 9, wobei das Polyoxyalkylen der Formel
H₂C=CHCH₂O[C₂H₄O]ₐCH₃ entspricht, wobei a zwischen 4 und 30 variiert.

11. Zusammensetzung, die gemäß dem Verfahren nach einem der Ansprüche 7 bis 10 hergestellt wurde.

12. Eine Behandlungszusammensetzung, die Reaktionsprodukte aus der Hydrolyse bzw. Kondensation des Organosiloxans nach einem der Ansprüche 1 bis 6 oder 11 umfasst.

13. Verfahren zur Behandlung einer Oberfläche, umfassend das Aufbringen der Zusammensetzung nach einem der Ansprüche 1 bis 6, 11 oder 12 auf eine Oberfläche.

14. Verfahren nach Anspruch 13, wobei das Oberfläche aus einer Cellulosefaser besteht.

15. Ein Herstellungsartikel, der die behandelte Faser aus Anspruch 14 umfasst.

## Revendications

1. Composition comprenant un organosilane de formule ;
(R¹)₍₃₋ₙ₎(R²O)ₙSiR³O(CH₂CH₂O)ₐ(C₃H₆O)_{b} R⁴
où
n vaut 1 ou 2,
a ≥ 1, b peut varier de 1 à 30, à condition que a≥b,
R¹ est un groupe hydrocarboné contenant 1 à 12 atomes de carbone,
R² est un hydrogène ou un groupe alkyle contenant 1 à 6 atomes de carbone,
R³ est un groupe hydrocarboné divalent contenant 2 à 12 atomes de carbone,
R⁴ est un hydrogène, R¹, ou un groupe acétyle.

2. Composition selon la revendication 1, où n vaut 2.

3. Composition selon l'une quelconque des revendications précédentes, où a va de 4 à 30.

4. Composition selon l'une quelconque des revendications précédentes, où R¹ est méthyle et R² est méthyle ou éthyle.

5. Composition selon l'une quelconque des revendications précédentes, où R³ est propylène ou -CH₂CH₂C(CH₃)₂-.

6. Composition selon la revendication 1, où l'organosilane est de formule moyenne
(CH₃)(CH₃O)₂Si CH₂CH₂C(CH₃)₂ O(C₂H₄O)₁₈(C₃H₆O)₁₈H.

7. Procédé de préparation d'une composition d'organosilane comprenant la mise en réaction de :
a) un organosilane de formule (R¹)₍₃₋ₙ₎(R²O)ₙSiH,
où R¹ est un groupe alkyle contenant 1 à 12 atomes de carbone,
R² est un hydrogène ou un groupe alkyle contenant 1 à 6 atomes de carbone,
l'indice n vaut 1 ou 2,
b) un polyoxyalkylène de formule R⁵O(CH₂CH₂O)ₐ(C₃H₆O)_{b} R⁴ dans lequel a ≥ 1, b peut varier de 1 à 30, à condition que a≥b,
R⁴ est un hydrogène, R¹, ou un groupe acétyle,
R⁵ est un groupe hydrocarboné aliphatique insaturé contenant 2 à 12 atomes de carbone, et
c) un catalyseur d'hydrosilylation.

8. Procédé selon la revendication 7, où R⁵ est
H₂C=CHC(CH₃)₂-.

9. Procédé selon la revendication 7 ou 8, où l'organosilane est de formule
(CH₃)(CH₃CH₂O)₂SiH.

10. Procédé selon la revendication 7 ou 9, où le polyoxyalkylène est de formule H₂C=CHCH₂O[C₂H₄O]ₐCH₃, où a varie de 4 à 30.

11. Composition préparée par le procédé selon l'une quelconque des revendications 7 à 10.

12. Composition de traitement comprenant les produits de réaction issus de l'hydrolyse et/ou de la condensation de l'organosilane selon l'une quelconque des revendications 1 à 6 ou 11.

13. Procédé de traitement d'une surface comprenant l'application de la composition selon l'une quelconque des revendications 1 à 6, 11 ou 12 sur une surface.

14. Procédé selon la revendication 13, où la surface est une fibre cellulosique.

15. Article de fabrication comprenant la fibre traitée selon la revendication 14.
